# EUROPEAN PATENT APPLICATION

(11) **EP 1 099 526 A1**
(43) Date of publication of application: **16.05.2001**
(21) Application number: 00203020.3
(22) Date of filing: 30.08.2000
(51) Int. Cl.: B29C 33/42, B29C 33/04, B65D 41/04, B29C 45/73

(54) **Mould for the production of plastic caps for bottles**

(30) Priority: 13.10.1999 IT MI992135
(71) Applicant: GEFIT S.p.A., 15100 Alessandria (IT)
(72) Inventor: Caruana, Alfonso, 15068 Pozzolo Formigaro (Alessandria) (IT)
(74) Representative: Siniscalco, Fabio

(57) **Abstract**

The present invention relates to a mould (1) for the production of plastic caps for bottles, comprising a plate (2) in which a mould chamber (3) is machined, a ring (11), a core (21) and cooling means (12, 13) for the said core, characterized in that it comprises cooling means (8, 9, 10) positioned externally with respect to the core (21). In addition, the present invention relates to a method for the production of plastic caps for bottles and to plastic caps obtained by said method.

## Description

The present invention relates to a mould for the production of plastic caps for bottles, comprising a plate in which a mould chamber is machined, a ring, a core and cooling means for said core.

In addition, the present invention relates to a method for the production of plastic caps for bottles and to plastic caps obtained by said method.

It is widely known that, for the production of plastic caps, the injection moulding method is generally used.

This type of moulding involves heating plastic until it melts, injecting said material into a mould, and cooling the material. Injection moulding is thus understood as meaning the shaping of plastic materials in a mould with the assistance of pressure and, usually, of heat.

In more detail, the material, which has been rendered fluid or plastic by the effect of heating, is introduced into the mould and forced to assume a predetermined shape, filling all the internal cavities of the mould. Subsequently, the material is caused to solidify, generally by simple cooling. Finally, the mould is opened and the shaped article is removed.

The above mentioned method thus involves the use of an apparatus comprising a mould formed by a plate, also known as the "female part", in which a mould chamber is machined. This chamber, during the injection and cooling phases, is closed by a corresponding core or "male part".

The male part comprises three cylindrical elements sliding along a common axis: an inner element for forming the base of the cap, an intermediate element for forming the annular lip which projects from the base of the cap, and an externally threaded outer element for forming the internally threaded skirt of the cap. The above mentioned elements are arranged coaxial with one another.

Said mould further possesses cooling means consisting of a first cold-water circuit which is caused to flow within the inner element and a second cold-water circuit provided between the intermediate and outer elements.

The first circuit consists of a fountain system produced within the inner element. This system takes the specific form of an ascending channel which, from the base of the inner element, extends as far as the tip, and a descending channel which, from the tip of the inner element, returns to the base.

The second circuit consists of a generally helical channel cut into the outer lateral surface of the intermediate element in a manner such as also to contact the inner lateral surface of the outer element.

In this latter channel, leaktight seals are provided to prevent the cooling liquid from escaping between the intermediate and outer elements. In particular, said seals are O-rings.

However, the mould described above possesses certain disadvantages.

First of all, the cooling system as described above is subject to wear of the seals after a certain number of moulding cycles. This occurs because the axial sliding movements of the intermediate element and the outer element, necessary in order to be able to remove the moulded article, cause the seals to rub on the sealing surfaces. It follows from this that, after a certain number of movements, the seals are worn to the point where they have to be replaced.

As a further consequence, production has to be interrupted to make way for the necessary, and far from easy, operations of removing and reinstalling the mould.

These disadvantages, then, are associated with a certain restriction of production, with problems of maintenance of the apparatus and with the costs of the latter.

Consequently, it is felt to be highly desirable to provide a mould for the production of plastic caps which is functional and practical and makes it possible to eliminate the so-called downtimes in which production has to be interrupted to enable the maintenance operations to be carried out.

The problem underlying the present invention is therefore that of devising a mould for the production of plastic caps for bottles whose structural and functional characteristics are such as to satisfy the above mentioned requirements and, at the same time, eliminate the disadvantages exhibited by the prior art moulds.

This object is achieved by means of a mould and a method for the production of a plastic cap for bottles as described in the attached claims.

It is another object of the present invention to provide a plastic cap for bottles obtained with the above mentioned mould and process, in accordance with the attached claims.

Further features and advantages of the mould, the method and the cap according to the present invention will become apparent from the description given below of two preferred examples of embodiment thereof, given by way of indication and implying no limitation, with reference to the attached figures, wherein:
- Figure 1 shows a schematic view in cross section of a mould according to the invention;
- Figure 2 shows a schematic view in cross section of the open mould according to Figure 1;
- Figure 3 shows a schematic view in cross section of the mould according to Figure 1 in a first phase of removal of the moulded cap;
- Figure 4 shows a schematic view in cross section of the mould according to Figure 1 in a second phase of removal of the moulded cap;
- Figure 5 shows a schematic view in cross section of the mould according to Figure 1 in a third phase of removal of the moulded cap; and
- Figure 6 shows a sectional view of a plastic cap for bottles according to the invention.

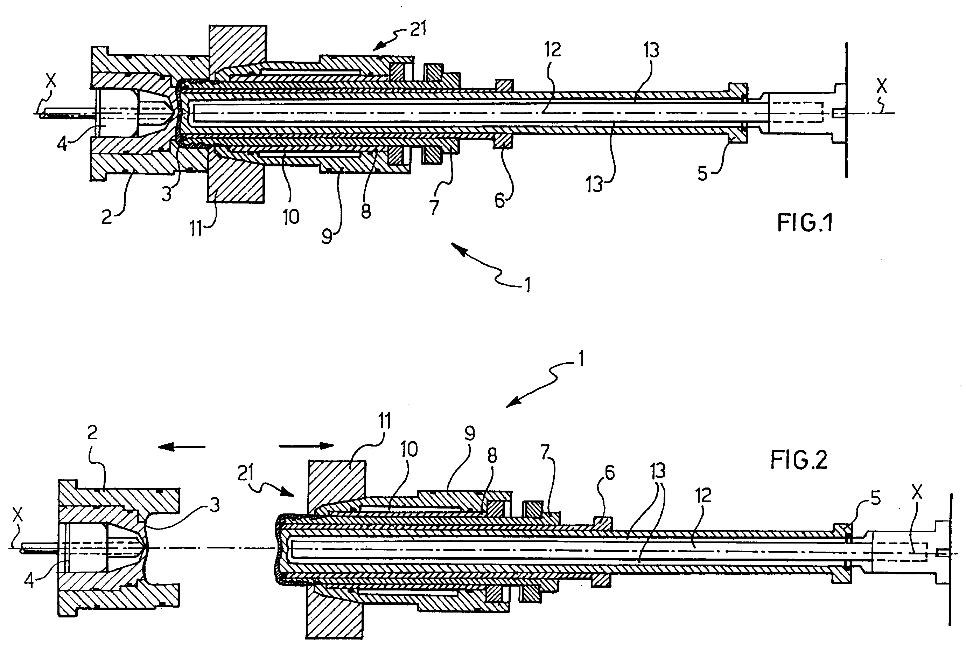

With reference to Figures 1 to 5, 1 globally designates a mould for the production of plastic caps for bottles according to the present invention.

The apparatus which permits the actuation of the mould 1 will not be described below, being widely known in the art.

The mould 1 comprises a plate 2, or female part, in which a mould chamber 3 is machined, a ring 11 and a core or male part 21. Said plate 2 further bears an injector 4, which communicates with the mould chamber 3 by means of an injection port for the plastic material, said port being positioned at the centre of said mould chamber 3.

The male part 21 comprises three cylindrical elements movable along a common axis X-X: an inner element 5, an intermediate element 6 and an outer element 7.

In the closed position, the head end of the inner element 5 terminates at a predetermined distance from the base of the mould chamber 3, in a manner such as to leave sufficient space for the shaping of the base of the cap.

The inner element 5 then possesses, internally, an ascending channel 12 and a descending channel 13 for the passage of a cooling fluid.

The intermediate element 6 is positioned externally and coaxially in contact with the inner element 5. The head end of said intermediate element 6 terminates at the level of the head end of the inner element 5.

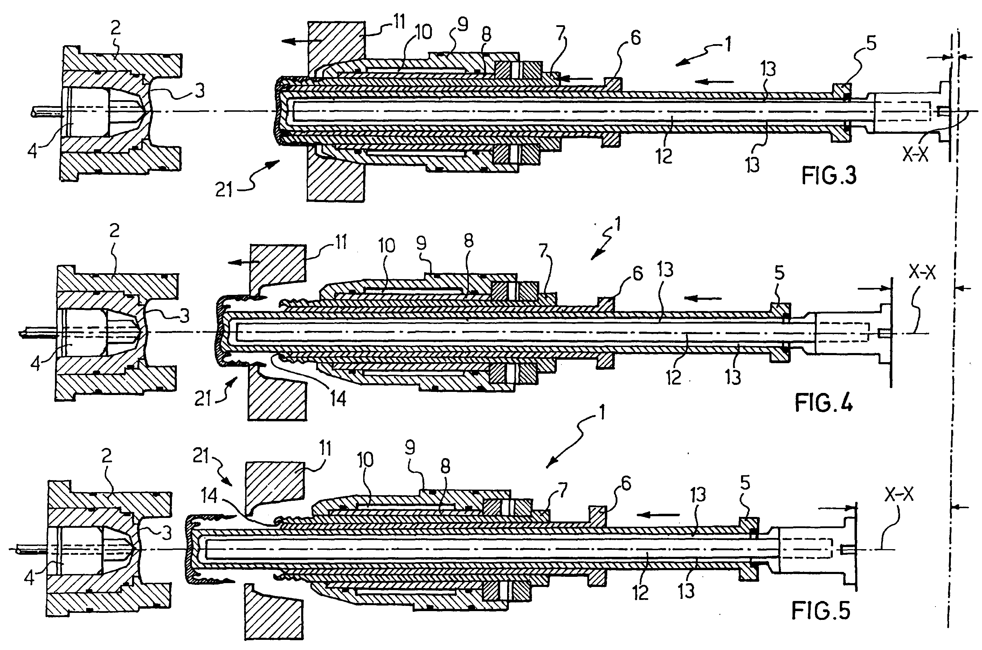

The outer element 7 is positioned externally and coaxially in contact with the intermediate element 6. This outer element 7 is, moreover, provided with an externally threaded head portion to form the threaded skirt of the cap. Furthermore, it possesses a recess 14 in its inner wall, towards the head end, as indicated in Figures 4 and 5. Said recess 14 serves to shape the annular lip projecting from the base of the cap.

In particular, the recess 14 is designed in a manner such as to form an annular lip having an undercut on its outer wall to which corresponds a projection positioned at a given distance from the base of the cap. This projection defines a point of sealing against the inner wall of the neck of a bottle in order to avoid the escape of a liquid contained therein once the cap has been screwed onto said neck.

The threaded head portion of the outer element 7 also terminates level with the corresponding head ends of the inner element 5 and intermediate element 6.

In addition to the cooling system provided within the inner element 5, the mould according to the present invention provides a further cooling system produced externally relative to the outer element 7. This system consists of at least one bush 8, 9 positioned in contact with and around the entire outer circumference of the outer element 7, in a manner such as substantially to enclose it over its entire height as far as the mould chamber 3.

Within the thickness of said at least one bush 8, 9 a space is provided capable of allowing a cooling liquid to flow.

Preferably, this outer cooling consists of an inner bush 8, an outer bush 9 and an air gap 10 formed between the said inner bush 8 and outer bush 9.

The ring 11 is a plate having a cylindrical inner section positioned about the end of the outer bush 9 towards the plate 2 and in a manner such as to abut sealingly against the plate 2 when the mould 1 is closed. Said ring 11 serves to shape the locking rim of the cap.

The functioning of the mould 1 described above takes place essentially in three phases: a first phase in which the thermoplastic is injected into the mould chamber 3, a second phase in which the three elements, inner element 5, intermediate element 6 and outer element 7 are cooled, and a third phase in which the moulded cap is released.

As already mentioned earlier, during the injection and cooling phases, the mould chamber 3 is closed by the three elements, inner element 5, intermediate element 6 and outer element 7, and by the ring 11, as shown in Figure 1.

The phase of injecting the thermoplastic into the mould chamber 3 takes place in a manner commonly known in the art, and will therefore not be described here.

It should be noted, however, that the cooling constitutes the crucial phase of the entire injection method for the production of plastic caps, in that it determines the speed at which an article is produced and also its mechanical and aesthetic properties. The reason is that, for the moulding of thermoplastics, the cores have to be continuously cooled; a very low temperature shortens cycle times but is not always best suited to guarantee optimum mechanical and aesthetic properties; relatively high temperatures facilitate the filling of the mould chamber and help to ordnance high-gloss articles but lengthen cycle times and encourage the occurrence of eddies.

According to the present invention, cooling takes place immediately on completion of the thermoplastic injection phase by causing a cooling fluid to flow simultaneously both inside the inner element 5, by means of the ascending channel 12 and descending channel 13, and outside the outer element 7, by means of the air gap 10 created between the two bushes, the inner bush 8 and outer bush 9.

In particular, the inner bush 8 and outer bush 9 are constructed from sintered porous metals so as to permit faster cooling.

Once the cooling phase has ended, and the thermoplastic has thus solidified in the mould chamber 3, the mould 1 is opened and the three elements, inner element 5, intermediate element 6 and outer element 7 are withdrawn, together with the inner bush 8 and outer bush 9 and the ring 11, as shown in Figure 2.

The cap thus formed will remain on the head ends of the three elements, the inner element 5, intermediate element 6 and outer element 7.

Following this opening, the extraction of the cap from the mould 1 takes place as a result of three successive movements by the inner element 5, the outer element 7 and the ring 11.

The first movement comprises the simultaneous advance of the inner element 5, the outer element 7 and the ring 11 towards the mould chamber 3, the intermediate element 6 remaining stationary as shown in Figure 3.

The second movement comprises a further advance of the inner element 5 and the ring 11 towards the mould chamber 3, as shown in Figure 4.

The third movement consists in a yet another advance by the inner element 5 alone towards the mould chamber 3, as shown in Figure 5.

The purpose of the first movement is to create sufficient space to allow the annular lip projecting from the base of the cap to bend slightly towards the interior of the cap.

This is because, during the second movement, the advance of the inner element 5 exerts pressure on the cap so as to slide it off the outer element 7. Following this movement, the annular lip is forced to bend slightly towards the interior of the cap in order to allow the recess 14 on the end of the outer element 7 to disengage itself from the connection formed by the outer projection of said annular lip.

The third movement takes the form of the actual removal of the moulded cap from the mould 1.

From what has been described, it is now apparent that the idea underlying the present invention is that of eliminating the cooling system provided between the intermediate element 6 and the outer element 7, as occurs in the prior art, and to move it outwards into contact with the outer element 7.

The mould according to the present invention thus makes it possible to avoid the provision of the seals necessary in the moulds of the prior art and to avoid all the disadvantages associated with such a cooling system.

In particular, it is no longer necessary to replace the above mentioned seals after a certain number of moulding cycles. It follows from this that production does not have to be interrupted to allow the necessary maintenance operations, and, at the same time, the costs of new seals and labour costs are also avoided.

A further advantage deriving from the present invention is that of the successful production of a plastic bottle cap having a surprisingly reduced thickness.

With regard to plastic caps for bottles currently available on the market, these are formed by a skirt with internal threading, a base with an annular lip, and a connecting zone between the skirt and the base.

Said caps have base and/or skirt thicknesses greater than or equal to 0.75 mm.

In particular, caps having an internal diameter of about 28 mm have a base thickness of 1.5 mm and a weight of about 3 grams.

Furthermore, the connecting zone is thickened, and substantially rigid, relative to the thicknesses of said skirt and base. This thickening is necessary because, when the cap is screwed onto the neck of a bottle, the rim of the neck must be able to abut against the thickened zone in order to produce a point of sealing to prevent the escape of the contents of said bottle.

Hitherto, it has not been possible to obtain caps of lesser thicknesses, because, if the thickness had been less than those mentioned above, during the removal of the cap from the mould, the thrust of the inner element 5 against the base of the cap would have caused said base to break.

This phenomenon is due to the fact that the thrust on the base of the cap is concentrated on a restricted surface area.

The solution to the above mentioned problem, or the ability to distribute the above mentioned thrust over a greater surface area, was however limited by the fact that the surface area of the head end of the inner element 5 could not be increased because of the bulk of the other two elements, the intermediate element 6 and outer element 8, and in particular of the thickness created by the presence of seals between the latter.

The solution adopted by the present invention makes it possible to eliminate these restrictions, since by eliminating the thickness created by the presence of the seals it is possible to increase the head surface area of the inner element 5 without changing the overall diameter of the mould.

It is obvious, then, that the force exerted by that element can now be distributed over a greater surface area so as to avoid the above mentioned problems of breakages.

A further advantage contributed by the mould and by the method for the production of plastic caps for bottles according to the invention is that of making it possible to cool the thermoplastic more quickly at the end of the injection phase.

The reason for this is that, since slighter thicknesses have been achieved, the cooling takes less time and this, in turn, shortens the entire moulding cycle.

According to the prior art, an entire moulding cycle for each cap lasts about 6 seconds.

Using the mould and the method according to the present invention, the entire moulding cycle for each cap lasts only about 3.5 seconds.

From what has been described hitherto, it is apparent that a substantial increase has been achieved in productivity, with an associated saving (30-35%) in material used.

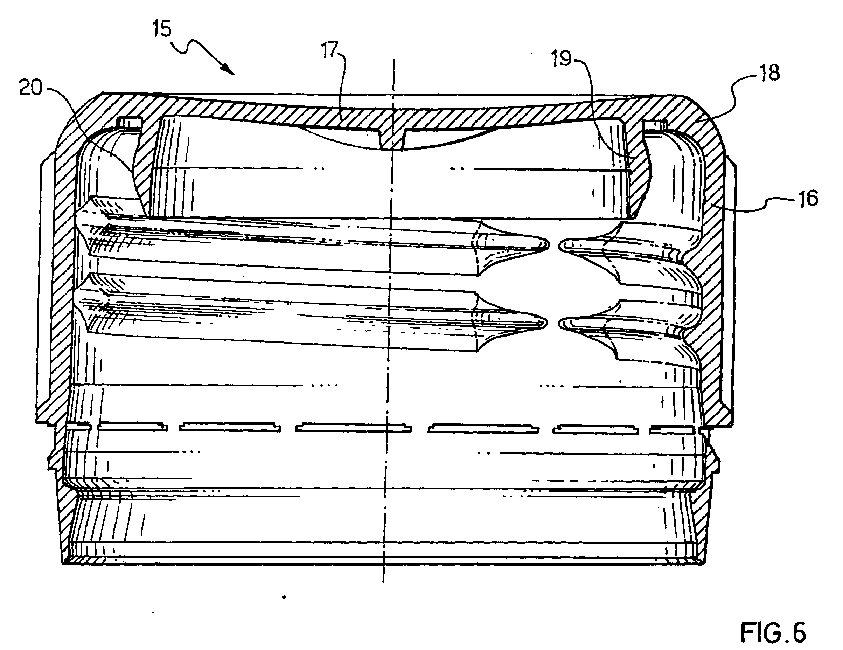

In accordance with the present invention, in Figure 6, 15 globally designates a plastic cap for bottles comprising a skirt 16, a base 17, a connecting zone 18 between the skirt and the base, and an annular lip 19 facing the interior of the cap 15 and projecting from said base, said annular lip 19 possessing a projection 20.

Advantageously, the connecting zone 18 has a sufficiently slight thickness to achieve elastic flexibility and form a leaktight seal with the rim of the neck of a bottle (not shown).

In particular, this connecting zone 18 has a thickness of between 0.70 mm and 0.50 mm, preferably between 0.67 mm and 0.63 mm, and more preferably it has a thickness of 0.65 mm.

According to an alternative embodiment of the present invention, the skirt 16 has a thickness substantially equal to the thickness of the connecting zone 18.

According to a further alternative embodiment, the base 17 also has a thickness substantially equal to the thickness of the connecting zone 18.

The advantage provided by these alternative embodiments of the present invention resides in the fact that the entire cap 15 can reach a weight of about 1.85 g while maintaining the same characteristics of pressure resistance and impact resistance as the plastic caps of the prior art.

Preferably, the annular lip 19 is of a thickness not less than the thickness of the base 17. This means that, at the level of the projection 20, the sealing efficacy of the annular lip 19 against the inner wall of the neck of the bottle is not reduced.

The mould for the production of a plastic cap for bottles according to the present invention may vary in shape depending on contingent requirements. For example, the threading of the outer element may be single or multiple.

Furthermore, the mould may be sized so as to obtain various cap diameters in accordance with requirements.

The materials from which said mould is manufactured may be metals, light alloys, models appropriately reinforced with fusible alloys and spray-coated with metal, and other models adapted to particular situations.

The moulds may be of the two-plate type or of the three-plate type.

The shape of the moulded caps may also undergo modifications resulting from the modifications introduced for the mould. Furthermore, the thermoplastics used for the formation of the cap may vary in accordance with requirements.

As can be appreciated from the foregoing, the mould, the method and the plastic cap for bottles according to the invention make it possible to satisfy the requirements to which reference is made in the introductory part of the present description and, at the same time, to overcome the disadvantages exhibited by the moulds and methods of the prior art.

Clearly, a person skilled in the art, in order to meet contingent and specific requirements, may introduce numerous modifications and variations to the mould and to the method for the production of plastic caps for bottles as described above, without thereby departing from the scope of the invention as defined in the claims that follow.

## Claims

1. Mould (1) for the production of plastic caps for bottles, comprising a plate (2) in which a mould chamber (3) is machined, a ring (11), a core (21) comprising an inner element (5) for forming a base of the cap, said inner element (5) comprising cooling means (12, 13), an intermediate element (6) for forming an annular lip projecting from the base of the cap and an outer element (7) for forming an internally threaded skirt of the cap, characterized in that it comprises cooling means (8, 9, 10) which extend externally in contact with said outer element (7) as far as the mould chamber (3).

2. Mould (1) according to Claim 1, in which the cooling means (8, 9, 10) comprise at least one bush (8, 9) which encloses the outer element (7) as far as the mould chamber (3), the bush (8, 9) having a thickness within which a space (10) is formed in which a cooling fluid can flow.

3. Mould (1) according to Claim 2, in which the cooling means comprise an inner bush (8) and an outer bush (9), which extend as far as the mould chamber (3), and an air gap (10) between the inner and outer bushes in which a cooling fluid can flow.

4. Method for the production of a plastic cap for a bottle, comprising the following consecutive phases:
- provision of the mould 1 according to Claims 1 to 3;
- heating of a thermoplastic to melting point;
- injection of the heated thermoplastic into the mould cavity (3), which is kept closed by the inner element (5), the intermediate element (6), the outer element (7) and the ring (11);
- cooling said internal (5), intermediate (6) and outer (7) elements with cooling means comprising cooling means (8, 9, 10) positioned externally with respect to the outer element (7);
- opening of the mould (1); and
- release of the moulded cap from the mould (1).

5. Plastic cap (15) for bottles, comprising a skirt (16), a base (17), a connecting zone (18) between the skirt and the base, and an annular lip (19) facing the interior of the cap (15) and projecting from the base, characterized in that the connecting zone (18) has a sufficiently slight thickness to achieve elastic flexibility and form a leaktight seal with the bottle.

6. Plastic cap (15) for bottles according to Claim 5, in which the connecting zone (18) between the skirt (16) and the base (17) has a thickness of between 0.70 mm and 0.50 mm, preferably between 0.67 mm and 0.63 mm.

7. Plastic cap (15) for bottles according to Claim 5, in which the connecting zone (18) between the skirt (16) and the base (17) has a thickness of 0.65 mm.

8. Plastic cap (15) for bottles according to any of Claims 5 to 7, in which the skirt (16) has a thickness substantially equal to the thickness of the connecting zone (18).

9. Plastic cap (15) according to any of Claims 5 to 8, in which the base (17) has a thickness substantially equal to the thickness of the connecting zone (18).

10. Plastic cap (15) according to any of Claims 5 to 9, in which the annular lip (19) has a thickness greater than or equal to the thickness of the base (17).
